# EUROPÄISCHE PATENTSCHRIFT

(11) **EP 2 609 840 B1**
(45) Veröffentlichungstag und Bekanntmachung des Hinweises auf die Patenterteilung: **08.07.2015**
(21) Anmeldenummer: 12008594.9
(22) Anmeldetag: 21.12.2012
(51) Int. Cl.: A47J 31/08

(54) **Einmalfilter für Kaffeepulver oder Tee**
Disposable filter for coffee powder or tea
Filtre à usage unique pour café en poudre ou thé

(30) Priorität: 21.12.2011 DE 202011109328 U
(43) Veröffentlichungstag der Anmeldung: 03.07.2013
(73) Patentinhaber: M.B. Werbung GmbH, 22393 Hamburg (DE)
(72) Erfinder: Brosch, Manfred, 22393 Hamburg (DE)
(74) Vertreter: Hauck Patentanwaltspartnerschaft mbB

(56) Entgegenhaltungen:
- EP-A2- 0 287 910
- DE-A1-102007 011 077
- DE-U1-202004 006 612
- JP-A- 2001 245 790
- JP-A- 2004 001 785
- US-A- 3 446 624

## Beschreibung

Die Erfindung bezieht sich auf einen Einmalfilter für Kaffeepulver oder Tee.

Kaffeefilter werden zur Zubereitung von Kaffee verwendet. Sie weisen einen durch-lässigen Träger und ein auf dem Träger angeordnetes Filterpapier auf. Auf das Filterpapier wird Kaffeepulver aufgebracht, das durch Mahlen von gerösteten Kaffeebohnen erzeugt wird. Auf das Kaffeepulver wird erhitztes Wasser gegossen, das die Aromastoffe aus dem Kaffeepulver extrahiert und durch das Filterpapier bzw. den durchlässigen Träger hindurch in einen darunter angeordneten Behälter abläuft.

Weit verbreitet sind annähernd trichterförmige Träger, die unten in einem streifenförmigen Boden ein oder mehrere Abflusslöcher aufweisen. Der Träger ist unten mit einem scheibenförmigen Vorsprung zum Abstützen auf einen Behälter versehen. In den Trichter wird eine Filtertüte aus Filterpapier eingesetzt, die das Kaffeepulver aufnimmt. Die Filtertüte ist aus zwei rand- und bodenseitig miteinander versiegelten Blättern aus Filterpapier gebildet.

Aus der EP 0 268 847 B1 ist ein Filter, insbesondere Kaffeefilter, zum Aufsetzen auf den Rand einer Tasse oder dergleichen Gefäß bekannt. Der Filter besteht aus einem auf den Tassenrand aufsetzbaren Dreieckrahmen und einem innerhalb desselben befestigten Beutel aus Filtermaterial, insbesondere Filterpapier. Der Dreieckrahmen wird durch einen zu einem Dreieck auffaltbaren Papp- bzw. Kartonzuschnitt gebildet. Um die Standsicherheit des Tassenfilters auf dem Tassenrand zu erhöhen, hat der Kartonrahmen an seinem der Tasse zugeordneten Stützrand Aussparungen zur Aufnahme des Tassenrandes.

Der bekannte Filter ist aufwendig. Die Handhabung erfordert das Auffalten und Ausrichten des Dreieckrahmens auf den Tassenrand, damit der Filter nicht abrutscht.

DE 10 2007 011 077 A1 beschreibt eine Extraktionsvorrichtung umfassend ein faltbares Trägerelement zum Aufsetzen auf einen Rand eines Trinkgefäßes, das aus beschichteter Pappe besteht und einen rechteckigen Plateauabschnitt mit einer Öffnung und zwei über Faltlinien mit den beiden Seiten des Plateauabschnittes verbundene Tragabschnitte aufweist. Zudem weist die Extraktionsvorrichtung einen im Wesentlichen rechteckigen Versteifungsrahmen mit dem Plateauabschnitt entsprechender Länge und Breite und einer zentralen Durchlassöffnung auf, deren Abmessungen jenen der Öffnung in dem Plateauabschnitt entsprechen. Die Durchlassöffnung ist von einem Wulst umgrenzt der von der Ebene des Versteifungsrahmens vorsteht. Der Versteifungsrahmen ist von oben oder von unten mit dem Wulst in die Öffnung des Plateauabschnittes eingesetzt und mit dem Trägerelement verklebt. Schließlich weist die Extraktionsvorrichtung eine Filtertüte auf, die Kaffeepulver enthält und mit dem Versteifungsrahmen verklebt ist.

Zum Zubereiten einer Tasse Kaffee ist das Trägerelement auf eine Tasse aufsetzbar, worauf heißes Wasser durch die Öffnungen der Filtertüte eingegossen werden kann.

Nachteilig ist der aufwendige Aufbau. Der Versteifungsrahmen ist ein gesondert hergestelltes Bauteil aus Polyethylenterephthalat. Dieses muss mit dem Trägerelement verklebt werden und an dieses muss in einem weiteren Schritt die Filtertüte angeklebt werden.

Der erfindungsgemäße Einmalfilter unterscheidet sich von der vorbekannten Extraktionsvorrichtung dadurch, dass die Trägerplatte eine wasserabweisende Schicht aus heißsiegelfähigem Material aufweist und die Trägerplatte durch Versiegeln mit dem Rand des Filterbeutels verbunden ist.

Der bekannte Einmalfilter hat den Nachteil, dass beim Eingießen von Kaffee der Karton aufweicht und der Kaffeefilter in eine Tasse abrutschen kann.

Davon ausgehend, liegt der Erfindung die Aufgabe zugrunde, einen handhabungsfreundlicheren Einmalfilter für Kaffeepulver oder Tee zur Verfügung zu stellen.

Die Aufgabe wird durch einen Einmalfilter für Kaffeepulver oder Tee mit den Merkmalen von Anspruch 1 gelöst. Vorteilhafte Ausgestaltungen des Einmalfilters sind in Unteransprüchen angegeben.

Der erfindungsgemäße Einmalfilter für Kaffeepulver oder Tee umfasst:
- eine Trägerplatte enthaltend mindestens eine Schicht aus Karton,
- ein Durchgangsloch in der Trägerplatte,
- einen Fiterbeutel enthaltend eine Füllung aus Kaffeepulver oder Tee, der mit dem Rand seiner Beutelöffnung um das Durchgangsloch herum an der Trägerplatte befestigt ist und mit seiner Füllung unterhalb der Trägerplatte angeordnet ist und
- eine wasserabweisende Schicht aus heißsiegelfähigem Material auf der Oberseite der Trägerplatte,
- bei dem die Trägerplatte durch Versiegeln mit dem Rand des Filterbeutel verbunden ist.

Der erfindungsgemäße Einmalfilter ist mit seiner Trägerplatte auf den Rand einer Tasse oder eines anderen Behälters aufsetzbar. Der Filterbeutel mit der Füllung aus Kaffeepulver oder Tee hängt unterhalb der Trägerplatte in den Behälter hinein. Durch das Durchgangsloch wird kochendes Wasser in den Filter hineingegeben, um Aromastoffe aus dem Kaffeepulver oder Tee zu extrahieren. Der Extrakt läuft durch den Filterbeutel in den Behälter hinein und der Filterbeutel hält den Kaffeesatz bzw. die Teepartikel zurück. Beim Aufgießen auf die Trägerplatte treffendes Wasser wird von der wasserabweisenden Schicht zurückgehalten, so dass es nicht an die Schicht aus Karton der Trägerplatte herangelangt. Infolgedessen ist die Stabilität der Trägerplatte beim Aufgießen nicht oder nicht so sehr beeinträchtigt, dass die Trägerplatte aufweicht und der Einmalfilter in den Behälter abrutscht. Hierdurch wird die Handhabung des Einmalfilters vereinfacht. Dieser kann nämlich nach der Zubereitung des Kaffees oder Tees einfach vom Behälter abgenommen und entsorgt werden. Die Schicht aus Karton ist vorzugsweise ein aus einer oder mehreren Lagen Papier bestehender Karton.

Gemäß einer Ausgestaltung ist die wasserabweisende Schicht so beschaffen, dass sie von Wasser nicht durchdrungen wird, wenn das Wasser über einen Zeitraum von einigen Minuten (vorzugsweise bis zu 10 Minuten) an ihr anliegt. Die wasserabweisende Schicht verhindert dann, dass an ihr anliegendes Wasser, beispielsweise aufgespritzte Wassertropfen, in den Karton eindringen. Dies kann beispielsweise durch eine hydrophobe wasserabweisende Schicht erreicht werden, die von Wasser nicht benetzt wird. Gemäß einer bevorzugten Ausgestaltung ist die wasserabweisende Schicht wasserdicht. Dies ist dann der Fall, wenn die wasserabweisende Schicht auch dann nicht von Wasser durchdrungen wird, wenn kochendes Wasser beim Eingeben in den Filterbeutel auf die Trägerplatte aufgegossen wird, und zwar über einen Zeitraum von einigen Minuten, vorzugsweise von bis zu 10 Minuten. Bevorzugt hält die wasserabweisende Schicht noch höheren Belastungen durch Wasser stand, beispielsweise über nach längerem Zeitraum anstehendem Wasser und/oder einer Wassersäule mit einem noch höheren Druck, als beim Aufgießen kochenden Wassers auf die Trägerplatte.

Gemäß einer weiteren Ausgestaltung weist die Trägerplatte auch auf der Unterseite eine wasserabweisende Schicht auf. Hierdurch wird die Schicht aus Karton der Trägerplatte auch gegen aufsteigenden Dampf aus dem Behältergeschützt und dies kann die Herstellung des Einmalfilters vereinfachen.

Gemäß einer weiteren Ausgestaltung weist die Trägerplatte zwei übereinanderliegende Schichten aus Karton auf. Dies begünstigt die Herstellung einer stabilen Trägerplatte aus Kartonmaterial mit geringer Wandstärke bzw. Grammatur. Außerdem ist es bei der Herstellung der Trägerplatte aus mehreren übereinanderliegenden Schichten möglich, den Filterbeutel mit dem Rand seiner Beutelöffnung zwischen den Schichten zu befestigen.

Gemäß einer weiteren Ausgestaltung sind die beiden Schichten aus Karton aus einem einteiligen Zuschnitt gebildet, dessen Hälften um eine Faltlinie zusammengefaltet sind. Hierdurch wird die Herstellung des Einmalfilters vereinfacht. Diese Ausgestaltung ist besonders vorteilhaft bei einer Trägerplatte, die an der Oberseite und an der Unterseite eine wasserabweisende Schicht aufweist, da hierfür der einteilige Zuschnitt nur auf einer Seite mit einer wasserabweisenden Schicht beschichtet sein muss. Nach dem Zusammenfalten der Hälften des Zuschnittes bildet nämlich die Beschichtung der einen Hälfte die wasserabweisende Schicht an der Oberseite und die Beschichtung der anderen Hälfte die wasserabweisende Schicht an der Unterseite des Trägers.

Gemäß einer weiteren Ausgestaltung ist der Filterbeutel mit dem Rand seiner Beutelöffnung durch ein Durchgangsloch in mindestens einer Schicht der Trägerplatte hindurchgeführt und mit dem Rand seiner Beutelöffnung zwischen zwei Schichten der Trägerplatte fixiert. Hierdurch wird eine sehr feste, beidseitige Fixierung des Randes der Beutelöffnung an der Trägerplatte erreicht. Außerdem wird hierdurch das äußere Erscheinungsbild des Einmalfilters durch die Fixierung des Randes der Beutelöffnung an der Trägerplatte nicht beeinträchtigt.

Gemäß einer weiteren Ausgestaltung weist die Trägerplatte einen Aufdruck auf. Eine Trägerplatte aus Karton ist sehr gut bedruckbar. Der Einmalfilter kann insbesondere mit Anwendungshinweisen und/oder mit Hinweisen auf den Hersteller/Händler des Kaffee- oder Teeproduktes bedruckt sein. Ferner kann der Träger mit einem Werbeaufdruck versehen sein, insbesondere wenn der Kaffeefilter zur Verkaufsförderung eingesetzt wird.

Gemäß einer weiteren Ausgestaltung ist die wasserabweisende Schicht durchsichtig. Dies ist vorteilhaft, insbesondere wenn die Trägerplatte einen Aufdruck aufweist. Gemäß einer weiteren Ausgestaltung ist der Aufdruck unterhalb der durchsichtigen wasserabweisenden Schicht angeordnet und somit von außen wahrnehmbar. Zudem kann die wasserabweisende Schicht einen Glanzdruckeffekt erzeugen.

Gemäß einer weiteren Ausgestaltung weist die Trägerplatte an der Oberseite einen das Durchgangsloch verschließenden Deckel auf, der entlang einer Schwächungslinie von der Trägerplatte ablösbar ist. Der Deckel hindert das Kaffeepulver oder den Tee an einem Herausfallen aus dem Einmalfilter. Die Abgrenzung des Deckels mittels einer Schwächungslinie in der Trägerplatte ermöglicht eine einfache Herstellung des Deckels aus dem Material der Trägerplatte.

Gemäß einer weiteren Ausgestaltung ist der Deckel in mindestens einer Schicht der Trägerplatte durch eine am Rand des Durchgangsloches umlaufende Schwächungslinie abgegrenzt. Infolgedessen ist nach dem Öffnen des Deckels der gesamte Querschnitt des Durchgangsloches für das Eingießen von Wasser nutzbar. Falls der Deckel mehrere Schichten aufweist, umfasst gemäß einer bevorzugten Ausgestaltung der Deckel Material nur aus den obersten Schichten und erstreckt sich dementsprechend die Schwächungslinie nur durch die obersten Schichten der Trägerplatte hindurch. Die unterste Schicht weist bevorzugt ein Durchgangsloch auf, durch das hindurch der Rand des Beutels geführt und zwischen der untersten und einer darüber angeordneten Schicht an der Trägerplatte befestigt ist.

Gemäß einer weiteren Ausgestaltung ist die wasserabweisende Schicht eine Folie oder ein Lack oder eine Zellofanierung. Gemäß einer bevorzugten Ausgestaltung ist die wasserabweisende Schicht eine Schicht aus Polyethylen (PE), insbesondere aus PE mit geringer Dichte (LDPE) oder aus PE mit hoher Dichte (HDPE), oder Polypropylen (PP) oder aus einem anderen wasserabweisenden Polymer.

Gemäß einer bevorzugten Ausgestaltung ist die Schicht aus PE, PP oder aus einem anderen wasserabweisenden Polymer ein- oder beidseitig auf den Karton aufextrudiert. Gemäß einer weiteren Ausgestaltung ist zwischen der Schicht aus PE, PP oder einem anderen wasserabweisenden Polymer ein Haftvermittler angeordnet. Gemäß einer weiteren Ausgestaltung sind das wasserabweisende Polymer und der Haftvermittler durch Koextrusion auf den Karton aufgebracht.

Bevorzugt kommen für die wasserabweisende Schicht lebensmittelverträgliche Materialien zum Einsatz.

Gemäß einer weiteren Ausgestaltung ist der Karton ein Primärfaserkarton. Der Primärfaserkarton ist lebensmittelverträglich. Gemäß einer alternativen Ausgestaltung ist der Karton ein Sekundärfaserkarton. Durch die wasserabweisende Schicht - vorzugsweise auf beiden Seiten des Sekundärfaserkartons - kann erreicht werden, dass der Karton nicht in Kontakt mit Wasser für die Zubereitung von Kaffee oder Tee kommt.

Gemäß einer weiteren Ausgestaltung besteht der Filterbeutel aus einem geschmacksneutralen, porösen Material. Gemäß einer weiteren Ausgestaltung ist der Filterbeutel aus Zellulosefasern oder aus einem papierähnlichen Material hergestellt. Dieser Filterbeutel kann insbesondere für Kaffeepulver verwendet werden. Gemäß einer anderen Ausgestaltung ist der Filterbeutel aus Abaca-Fasern oder Biokunststoffen (Polylactide) oder einem anderen Spezial-Filterpapier hergestellt. Dieser Filterbeutel kann insbesondere für Tee verwendet werden. Gemäß einer weiteren Ausgestaltung ist der Filterbeutel aus einem heißsiegelfähigem Material. Dies ermöglicht eine Verbindung des Filterbeutels mit der Trägerplatte durch Versiegeln. Gemäß einer weiteren Ausgestaltung ist der Filterbeutel aus einem Vlies hergestellt. Schließlich sind gemäß der Erfindung die Schichten der Trägerplatte und/oder der Rand des Filterbeutels durch Versiegeln miteinander verbunden. Das Versiegeln kann insbesondere zum Einsatz kommen, weil die wasserabweisende Schicht aus einem heißsiegelfähigen Material besteht. Das Aufbrühen von Kaffee mittels des erfindungsgemäßen Einmalfilters ist eine offene Brühmethode. Das Aufbrühen von Kaffee in einem Automaten hat den Vorteil, dass mehr Furan abdampft und weniger Furan im Kaffeegetränk übrigbleibt. Das möglicherweise von Furanen ausgehende gesundheitliche Risiko kann somit bei Anwendung des erfindungsgemäßen Einmalfilters weitgehend vermieden werden.

Die Erfindung wird nachfolgend anhand der anliegenden Zeichnungen von Ausführungsbeispielen näher erläutert. In den Zeichnungen zeigen:
- Fig. 1: einen einteiligen Zuschnitt einer Trägerplatte flachliegend in der Draufsicht auf die Innenseite;
- Fig. 2: den Zuschnitt von Fig. 1 mit fixiertem Filterbeutel beim Zufalten der Hälften in einer Perspektivansicht schräg von oben und von der Seite;
- Fig. 3: der fertige Einmalfilter auf eine Tasse aufgesetzt in einer Perspektivansicht schräg von oben und von der Seite;
- Fig. 4: zwei Zuschnitte mit fixiertem Filterbeutel beim Zusammensetzen zum Bilden eines weiteren Einmalfilters schräg von oben und von der Seite;
- Fig. 5: einen weiteren Einmalfilter geöffnet schräg von oben und von der Seite;
- Fig. 6a-c: Trägerplatten mit sechseckiger (Fig. 6a), achteckiger (Fig. 6b) und elliptischer (Fig. 6c) Kontur in einer grob schematischen Draufsicht.

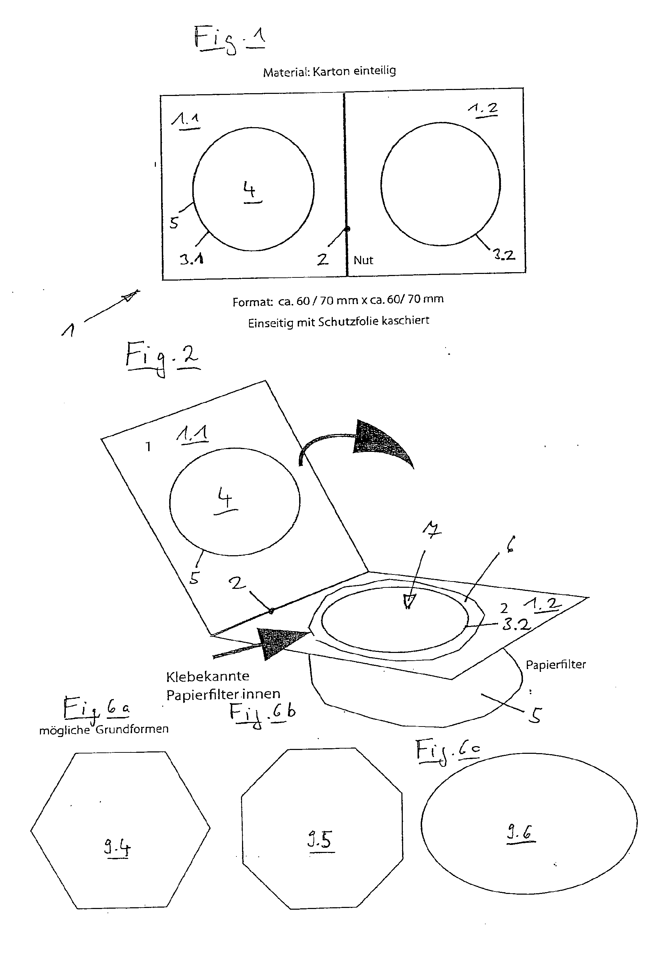

Gemäß Fig. 1 ist ein rechteckiger Zuschnitt 1 aus Karton zum Bilden einer quadratischen Trägerplatte durch eine Rilllinie 2 an der Innenseite oder eine andere Faltlinie in zwei quadratische Hälften 1.1, 1.2 unterteilt. In jeder Hälfte 1.1, 1.2 ist zentral ein kreisrundes Durchgangsloch 3.1, 3.2 angeordnet. Das Durchgangsloch 3.1 ist durch einen Deckel 4 verschlossen, der durch eine Schwächungslinie 5 in Form einer Perforationslinie in der Hälfte 1.1 des Zuschnittes 1 angegrenzt ist. Das Durchgangsloch 3.2 ist von vornherein geöffnet.

Gemäß Fig. 2 ist ein Filterbeutel 5 mit dem Rand 6 mit einer Beutelöffnung 7 durch das untere Durchgangsloch 3.2 hindurchgeführt und auf der Innenseite der Hälfte 1.2 des Zuschnittes 1 fixiert, z.B. durch Kleben oder Heißsiegeln. Ferner wird in Filterbeutel 5, der sich überwiegend unterhalb der Hälfte 1.2 befindet, eine Portion Kaffeepulver oder Tee für eine Tasse oder einen Becher Kaffee oder Tee eingefüllt.

Die Hälfte 1.1 wird um die Faltlinie 2 gegen die Hälfte 1.2 gefaltet und mit dieser verklebt. Der Einmalfilter 8.1 wird durch Zusammenfalten und Miteinanderverbinden der Hälften 1.1, 1.2 fertig gestellt. Die Hälften 1.1, 1.2 sind Schichten einer Trägerplatte 9.1. Die Durchgangslöcher 3.1, 3.2 bilden gemeinsam ein einziges Durchgangsloch 3.

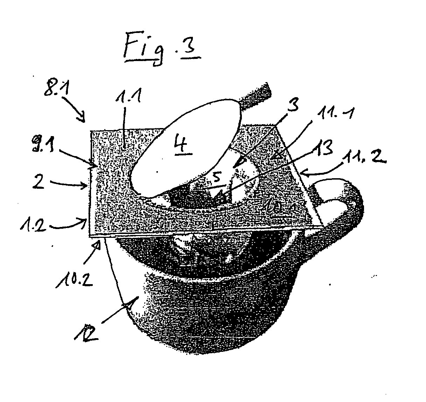

Der fertige Einmalfilter 8.1 ist in Fig. 3 gezeigt. Der Einmalfilter 8.1 hat auf der Oberseite und der Unterseite jeweils eine wasserabweisende Schicht 10.1, 10.2. Die wasserabweisende Schicht 10.1, 10.2 ist von einer transparenten Schutzfolie gebildet, die auf der Außenseite der beiden Hälften 1.1, 1.2 des Zuschnittes angeordnet ist. Es kann sich um eine zusammenhängende Schutzfolie handeln oder um zwei getrennte Schutzfolien, die sich bis zu der Faltlinie 2 erstrecken. Anstatt einer Schutzfolie kann ein transparenter Lack verwendet werden. Vorzugsweise ist die wasserabweisende Schicht eine auf dem Karton aufextrudierte Schicht aus PE oder PP. Unter der wasserabweisenden Schicht ist auf den Außenseiten der Trägerplatte 9 ein Aufdruck 11.1, 11.2 aufgedruckt.

Gemäß Fig. 3 ist der Deckel 4 durch Auftrennen entlang der Schwächungslinie 5 bereits geöffnet, um durch Eingießen von heißem Wasser durch das Durchgangsloch 3 ein Getränk vorzubereiten.

Für die Zubereitung eines Getränkes ist die Trägerplatte 9.1 auf den Rand einer Tasse 12 aufgesetzt. Bei geöffnetem Deckel 4 wird erhitzt4es Wasser durch die Durchgangsöffnung 3 in den Filterbeutel 5 gegossen und das Getränk sammelt sich nach dem Durchtritt durch das Kaffeepulver 13 und den Filterbeutel 5 in der Tasse 12.

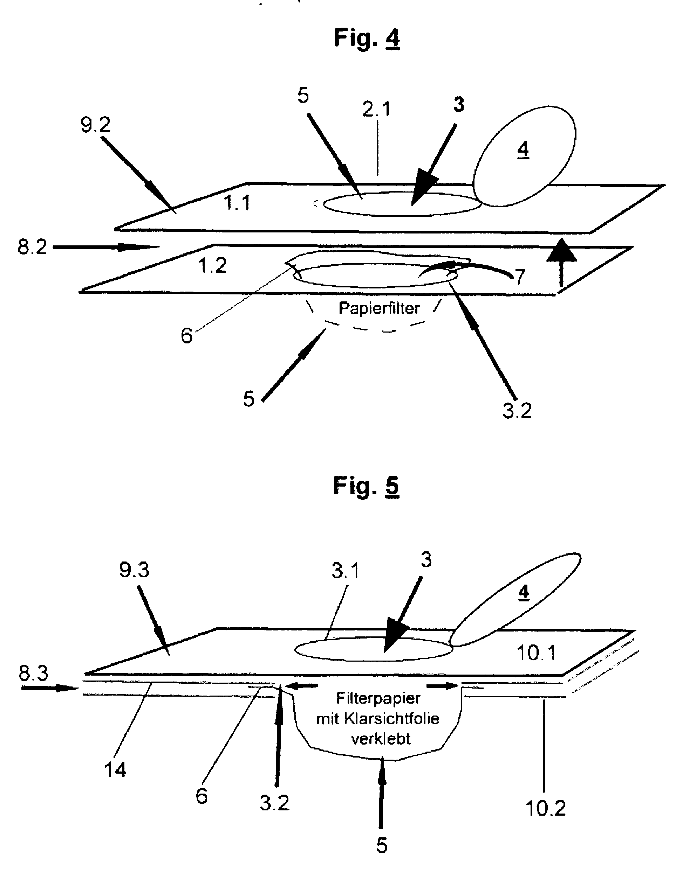

Fig. 4 zeigt einen alternativen Einmalfilter 8.2, bei dem die Trägerplatte 9.2 aus zwei ursprünglich getrennten Zuschnitten 1.1, 1.2 aus Karton gebildet wird, von denen jeder einen der beiden Hälften 1.1, 1.2 des Zuschnittes 1 von Fig. 1 entspricht. Die Zuschnitte 1.1, 1.2 werden nach Befestigung des Filterbeutels 5 mit seinem Rand 6 an der Innenseite des Zuschnitts 1.2 zusammengebracht und miteinander verklebt. Der fertige Einmalfilter 8.2 stimmt bis auf die Faltlinie 2 mit dem Einmalfilter 8.1 überein.

Fig. 5 zeigt einen weiteren alternativen Einmalfilter 8.3, bei dem die Trägerplatte 9.3 nur eine einzige Lage aus einem Zuschnitt 1.1 entsprechend einer Hälfte 1.1 des Zuschnitts 1 aus Karton umfasst. Der Filterbeutel 5 ist mit dem Rand 6 seiner Beutelöffnung 7 unten an den Rand eines Durchgangsloches 3.2 in einer Klarsichtfolie 14 angeklebt. Die Klarsichtfolie 14 ist auf die Unterseite des Zuschnitts 1.1 kaschiert, so dass das Durchgangsloch 3.2 der Klarsichtfolie 14 gemeinsam mit dem Durchgangsloch 3.1 des Zuschnitts 1.1 ein Durchgangsloch 3 bildet. Sowohl die Oberseite als auch die Unterseite der Trägerplatte 9.3 sind mit einer wasserabweisenden Schicht 10.1, 10.2 versehen. Im Beispiel handelt es sich hierbei um eine Schutzfolie und/oder einen Lack und/oder eine aufextrudierte Schicht aus PE, PP oder einem anderen wasserabweisenden und vorzugsweise lebensmittelverträglichen Polymer. Die Schutzfolie und/oder Lack und/oder aufextrudierte Schicht ist zum Beispiel weiß, bedruckt oder unbedruckt und auf die Klarsichtfolie 14 kaschiert.

Die Einmalfilter 8.2, 8.3 sind wie der Einmalfilter 8.1 verwendbar. Insoweit wird auf die Erläuterungen zu Fig. 3 verwiesen.

Grundsätzlich reicht es bei einfachen Ausführungen aus, nur die Oberseite der Trägerplatte 9.1 bis 9.3 mit einer wasserabweisenden Schicht 10.1 zu versehen.

Fig. 6 zeigt verschiedene Konturen der Trägerplatte 9.4, 9.5, 9.6. Gemäß Fig. 6a ist sie sechseckig, gemäß Fig. 6b achteckig und gemäß Fig. 6c oval. Die Trägerplatte 9 kann auch kreisrund oder in anderer Weise vieleckig ausgebildet sein oder andere Konturen aufweisen.

## Patentansprüche

1. Einmalfilter für Kaffeepulver oder Tee mit
- einer Trägerplatte (9) enthaltend mindestens eine Schicht (1.1, 1.2) aus Karton,
- ein Durchgangsloch (3) in der Trägerplatte (9),
- einen Filterbeutel (5) enthaltend eine Füllung aus Kaffeepulver (13) oder Tee, der mit dem Rand (6) seiner Beutelöffnung (7) um das Durchgangsloch (3) herum an der Trägerplatte (9) befestigt ist und mit seiner Füllung unterhalb der Trägerplatte (9) angeordnet ist,
- **gekennzeichnet durch**
- eine wasserabweisende Schicht (10.1) aus heißsiegelfähigem Material auf der Oberseite der Trägerplatte (9),
- wobei
die Trägerplatte (9) **durch** Versiegeln mit dem Rand (6) des Filterbeutels (5) verbunden ist.

2. Einmalfilter gemäß Anspruch 1, bei dem die Trägerplatte (9) auch auf der Unterseite eine wasserabweisende Schicht (10.2) aufweist.

3. Einmalfilter nach Anspruch 1 oder 2, bei dem die Trägerplatte (9) zwei übereinanderliegende Schichten (1.1, 1.2) aus Karton aufweist.

4. Einmalfilter nach Anspruch 3, bei dem die beiden Schichten (1.1, 1.2) aus Karton aus einem einteiligen Zuschnitt (1) gebildet sind, dessen Hälften um eine Faltlinie (2) zusammengefaltet sind.

5. Einmalfilter nach einem der Ansprüche 1 bis 4, bei dem der Filterbeutel (5) mit dem Rand (6) seiner Beutelöffnung (7) durch ein Durchgangsloch (3.2) in mindestens einer Schicht (1.2) der Trägerplatte (9) hindurchgeführt und mit dem Rand (6) seiner Beutelöffnung (7) zwischen zwei Schichten (1.1, 1.2) der Trägerplatte (9) fixiert ist.

6. Einmalfilter nach einem der Ansprüche 1 bis 5, bei dem die Trägerplatte (9) einen Aufdruck (11.1, 11.2) aufweist.

7. Einmalfilter nach einem der Ansprüche 1 bis 6, bei dem die wasserabweisende Schicht (10.1, 10.2) durchsichtig ist.

8. Einmalfilter nach Anspruch 6 und 7, bei dem die Trägerplatte (9) unterhalb der durchsichtigen wasserabweisenden Schicht (10.1, 10.2) einen Aufdruck (11.1, 11.2) aufweist.

9. Einmalfilter nach einem der Ansprüche 1 bis 8, bei dem die Trägerplatte (9) an der Oberseite einen das Durchgangsloch (3) verschließenden Deckel (4) aufweist, der entlang einer Schwächungslinie (5) von der Trägerplatte (9) ablösbar ist.

10. Einmalfilter nach Anspruch 9, bei dem der Deckel (4) in mindestens einer Schicht (1.1) der Trägerplatte (9) durch eine am Rand des Durchgangsloches (3.1) umlaufende Schwächungslinie (5) abgegrenzt ist.

11. Einmalfilter nach einem der Ansprüche 1 bis 10, bei dem die wasserabweisende Schicht (10.1, 10.2) eine Folie oder ein Lack oder eine Zellofanierung oder eine Schicht aus Polyethylen, Polypropylen oder einem anderen wasserabweisenden Polymer ist.

12. Einmalfilter nach Anspruch 11, bei dem die Schicht aus Polyethylen, Polypropylen oder einem anderen Polymer ein- oder beidseitig auf dem Karton aufextrudiert ist.

13. Einmalfilter nach einem der Ansprüche 1 bis 12, bei dem der Karton ein Primärfaserkarton ist.

14. Einmalfilter nach einem der Ansprüche 1 bis 13, bei dem der Filterbeutel (5) aus einem Vlies hergestellt ist.

15. Einmalfilter nach einem der Ansprüche 1 bis 14, bei dem die Schichten (1.1, 1.2) der Trägerplatte (9) durch Kleben und/oder Schweißen und/oder Versiegeln miteinander verbunden sind.

## Claims

1. A disposable filter for coffee powder or tea having
- a carrier plate (9) containing at least one layer (1.1, 1.2) of cardboard,
- a clearance hole (3) in the carrier plate (9),
- a filter bag (5) containing a filling of coffee powder (13) or tea that with the edge (6) of its bag opening (7) is attached to the carrier plate (9) around the clearance hole (3), and is arranged with its filling beneath the carrier plate (9),
- **characterized by**
- a water repellent layer (10.1) of hot-sealable material on the top side of the carrier plate (9),
- wherein
the carrier plate (9) is connected to the edge (6) of the filter bag (5) by sealing.

2. The disposable filter according to claim 1, in which the carrier plate (9) has a water repellent layer (10.2) also on the bottom side.

3. The disposable filter according to claim 1 or 2, in which the carrier plate (9) has two layers (1.1, 1.2) of cardboard lying on top of one another.

4. The disposable filter according to claim 3, in which the two layers (1.1, 1.2) of cardboard are formed from an integral pre-cut part (1) the halves of which are folded together along a fold line (2).

5. The disposable filter according to one of the claims 1 to 4, in which the filter bag (5) with the edge (6) of its bag opening (7) is guided through a clearance hole (3.2) in at least one layer (1.2) of the carrier plate (9), and with the edge (6) of its bag opening (7) is secured between two layers (1.1, 1.2) of the carrier plate (9).

6. The disposable filter according to one of the claims 1 to 5, in which the carrier plate (9) has an impression (11.1, 11.2).

7. The disposable filter according to one of the claims 1 to 6, in which the water repellent layer (10.1, 10.2) is transparent.

8. The disposable filter according to claims 6 and 7, in which the carrier plate (9) has an imprint (11.1, 11.2) beneath the transparent water repellent layer (10.1, 10.2).

9. The disposable filter according to one of the claims 1 to 8, in which the carrier plate (9) on the top side has a cover (4) closing the clearance hole (3) that can be removed from the carrier plate (9) along a tear line (5).

10. The disposable filter according to claim 9, in which the cover (4) is delimited in at least one layer (1.1) of the carrier plate (9) by a circumferential tear line (5) at the edge of the clearance hole (3.1).

11. The disposable filter according to one of the claims 1 to 10, in which the water repellent layer (10.1, 10.2) is a film or a varnish or a cellophane or a layer of polyethylene, polypropylene or another water repellent polymer.

12. The disposable filter according to claim 11, in which the layer of polyethylene, polypropylene or another polymer is extruded onto one or both sides on the cardboard.

13. The disposable filter according to one of the claims 1 to 12, in which the cardboard is a virgin fiber cardboard.

14. The disposable filter according to one of the claims 1 to 13, in which the filter bag (5) is produced from a nonwoven material.

15. The disposable filter according to one of the claims 1 to 14, in which the layers (1.1, 1.2) of the carrier plate (9) are connected together using bonding and/or welding and/or sealing.

## Revendications

1. Filtre à usage unique pour café en poudre ou thé, avec
- un plateau de support (9) contenant au moins une couche de carton (1.1, 1.2),
- un trou de passage (3) dans le plateau de support (9),
- un sachet filtrant (5) contenant une dose de poudre de café (13) ou de thé, lequel est fixé au plateau de support (9) avec le bord (6) de son ouverture de sachet (7) autour du trou de passage (3) et agencé avec sa dose en dessous du plateau de support (9),
- **caractérisé par**
- une couche hydrofuge (10.1) constituée d'un matériau thermoscellable sur la face supérieure du plateau de support (9),
- dans lequel
le plateau de support (9) est relié au bord du sachet filtrant (5) par scellage.

2. Filtre à usage unique selon la revendication 1, dans lequel le plateau de support (9) présente également une couche hydrofuge (10.2) sur sa face inférieure.

3. Filtre à usage unique selon la revendication 1 ou 2, dans lequel le plateau de support (9) présente deux couches de carton superposées (1.1, 1.2).

4. Filtre à usage unique selon la revendication 3, dans lequel les deux couches de carton (1.1, 1.2) sont constituées à partir d'une découpe d'une seule pièce (1), dont les moitiés sont pliées ensemble autour d'une ligne de pliage (2).

5. Filtre à usage unique selon l'une des revendications 1 à 4, dans lequel le sachet filtrant (5) est introduit avec le bord (6) de son ouverture de sachet (7) à travers un trou de passage (3.2) dans au moins une couche (1.2) du plateau de support (9), et fixé avec le bord (6) de son ouverture de sachet (7) entre deux couches (1.1, 1.2) du plateau de support (9).

6. Filtre à usage unique selon l'une des revendications 1 à 5, dans lequel le plateau de support (9) présente une surimpression (11.1, 11.2).

7. Filtre à usage unique selon l'une des revendications 1 à 6, dans lequel la couche hydrofuge (10.1, 10.2) est transparente.

8. Filtre à usage unique selon les revendications 6 et 7, dans lequel le plateau de support (9) présente une surimpression (11.1, 11.2) en dessous de la couche hydrofuge (10.1, 10.2) transparente.

9. Filtre à usage unique selon l'une des revendications 1 à 8, dans lequel, sur sa face supérieure, le plateau de support (9) présente un couvercle (4) fermant le trou de passage (3), lequel peut être détaché du plateau de support (9) le long d'une ligne d'affaiblissement (5).

10. Filtre à usage unique selon la revendication 9, dans lequel le couvercle (4) est délimité par une ligne d'affaiblissement (5) périphérique au bord du trou de passage (3.1), dans au moins une couche (1.1) du plateau de support (9).

11. Filtre à usage unique selon l'une des revendications 1 à 10, dans lequel la couche hydrofuge (10.1, 10.2) est une feuille ou un vernis ou un cellophanage ou une couche de polyéthylène, de polypropylène ou d'un autre polymère hydrofuge.

12. Filtre à usage unique selon la revendication 11, dans lequel la couche de polyéthylène, de polypropylène ou d'un autre polymère est extrudée sur un côté ou les deux côtés du carton.

13. Filtre à usage unique selon l'une des revendications 1 à 12, dans lequel le carton est un carton de fibres primaires.

14. Filtre à usage unique selon l'une des revendications 1 à 13, dans lequel le sachet filtrant (5) est fabriqué à partir de non-tissé.

15. Filtre à usage unique selon l'une des revendications 1 à 14, dans lequel les couches (1.1, 1.2) du plateau de support (9) sont reliées entre elles par collage et/ou par soudage et/ou par scellage.
